# EUROPEAN PATENT SPECIFICATION

(11) **EP 1 245 129 B1**
(45) Date of publication and mention of the grant of the patent: **22.08.2007**
(21) Application number: 99965551.7
(22) Date of filing: 23.12.1999
(51) Int. Cl.: H04Q 11/04

(54) **THE DELIVERY OF TIMERS AND PHARMETERS TO THE SERVICE SPECIFIC CONVERGENCE SUBLAYER (SSCS) OF THE SIGNALLING ATM ADAPTATION LAYER (SAAL) AT THE NETWORK NODE INTERFACE (NNI) AND AT THE USER NETWORK INTERFACE (UNI)**
ÜBERGABE VON TIMERN UND PARAMETERN AN DIE DIENSTSPEZIFISCHE UNTERSCHICHT (SSCS) DER ATM-ANPASSUNGSSCHICHT FÜR SIGNALISIERUNG (SAAL) AN DER NETZSCHNITTSTELLE (NNI) UND AN DER TEILNEHMERSCHNITTSTELLE (UNI)
DISTRIBUTION DE MINUTEURS ET DE PARAMETRES A LA SOUS-COUCHE DE CONVERGENCE SPECIFIQUE D'UN SERVICE (SSCS) DE LA COUCHE D'ADAPTATION MTA DE SIGNALISATION (SAAL) SUR L'INTERFACE DE NOEUD DE RESEAU (NNI) ET SUR L'INTERFACE USAGER/RESEAU (UNI)

(43) Date of publication of application: 02.10.2002
(73) Proprietor: Nokia Corporation, 02150 Espoo (FI)
(72) Inventor: KOIVUPURO, Outi, FIN-00360 Helsinki (FI); HOLLMEN, Ari, FIN-00370 Helsinki (FI); NYRHINEN, Hannu, FIN-01480 Vantaa (FI); RÖYTTÄ, Sami, FIN-00390 Helsinki (FI)
(74) Representative: TBK-Patent
(86) International application number: PCT/EP1999/010362
(87) International publication number: WO 2001/049062

(56) References cited:
- EP-A- 0 820 209
- WO-A-99/34620
- RATHGEB ET. AL: "ATM - Infrastruktur für die Hochleistungskommunikations" 1997 , SPRINGER , BERLIN XP002132623 Chapter 7.1 pages 198 - 208

## Description

### Field of the invention

The present invention relates to a method for delivering at least one operation variable from a Layer Management (LM) to a Service Specific Convergence Sublayer (SSCS) of a Signalling ATM Adaptation Layer (SAAL), and also to corresponding means for performing SAAL functions.

### BACKGROUND OF THE INVENTION

The present invention relates to the so-called Signalling ATM Adaptation Layer (SAAL) which is defined in the ITU-T Q.2100. In the following, the main function of the SAAL and the layers related thereto are described in short.

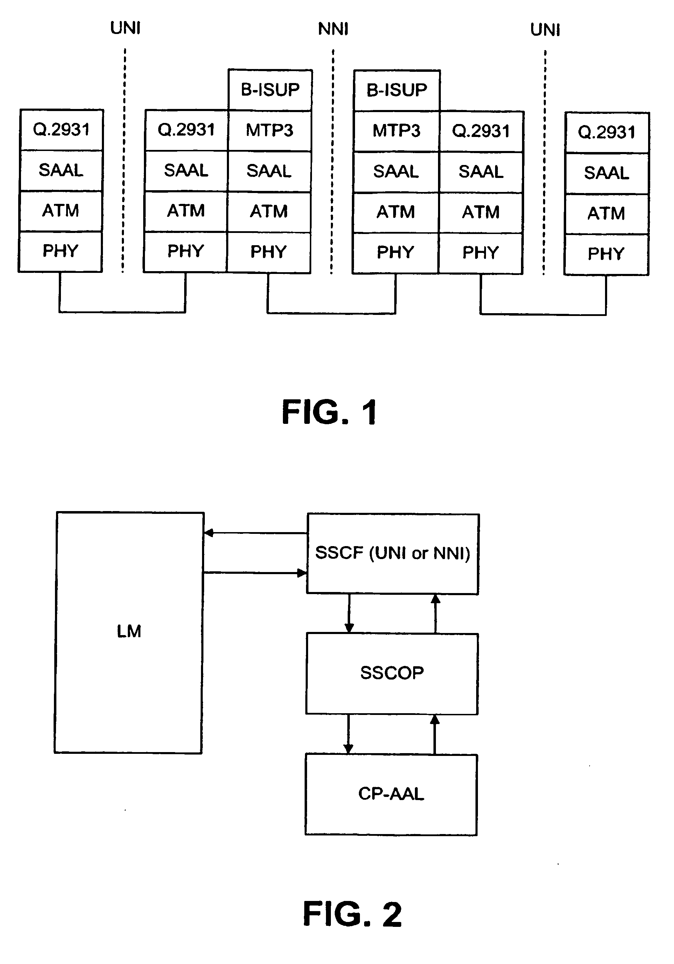

Fig. 1 illustrates the placement of the SAAL in broadband signalling stacks (protocol stacks) for User-Network-Interface (UNI) and Network-Node-Interface (NNI) operations. For the UNI, Q.2931 (ITU-T specification, Q.2931 is a variation of ISDN layer 3 Q.931) is used to set up and tear down a connection. It operates over the Signalling ATM Adaptation Layer (SAAL) which is designed especially for Q.2931. These layers operate over the conventional ATM (Asynchronous Transfer Mode) layer and a selected physical layer (indicated by PHY in Fig. 1). For the NNI, the broadband ISUP (B-ISDN) and Message Transfer Part 3 (MTP3) are variations of their counterparts in the SS7 signalling standard. The SAAL supports their operations. These layers also operate over the conventional ATM layer and a selected physical layer.

The SAAL serves to provide a correct transfer of signalling data on a broadband signalling link. It relieves the user of concerning about data errors, duplicates, or insertions that may occur on the signalling link.

SAAL provides a link monitoring service, and checks whether links are stable and error-free enough to be used. It can also take a link out of service if it becomes unreliable. SAAL also provides for flow control procedures and employs a mechanism to insure that two exchanges do not create congestion problems.

The SAAL comprises two protocol entities, a Service Specific Coordination Function (SSCF) and a Service Specific Connection Oriented Protocol (SSCOP) which contribute to the overall functions of the SAAL. These overall operations are coordinated by a Layer Management (LM) .

Fig. 2 shows schematically the relationship between the LM (Layer Management), the SSCF (Service Specific Coordination Function) either at the UNI or the NNI, the SSCOP (Service Specific Connection Oriented Protocol) and a so-called Common Part AAL Protocol (CP-AAL) by which the normal procedures of the AAL (ATM adaptation layers) are performed. The arrows indicate the flow between these layers.

The SSCF maps primitives received from the MTP3 layer to the required SSCOP signals and vice versa. That is, it transfers signals the SSCOP and the MTP 3 or Q.2931 layer. Moreover, SSCF is responsible for the flow control. That is, it notifies the user about levels of congestion in order to prevent a cell loss. It also regulates its flow of Protocol Data Units (PDUs) to the lower layers to prevent congestion at the other end. Furthermore, SSCF is responsible for the link status. Based on primitives it receives from MTP3 and SSCOP, the SSCF maintains information (local state variables) about the status of the link, such as information indicating that the link is aligned ready or that it is out of service and so on. Using this information, it may generate primitives/signals to MTP3 and SSCOP to aid in managing the link. In addition, the SSCF reports to the Layer Management (LM) when a link is released. It relies upon LM to help in the error monitoring function. Finally, SSCF maintains the information (state variables) about all the alignment procedures that are taking place when a link is brought into service or taken out of service.

The alignment procedures are carried out by the SSCF to bring a link into service upon a request from the user (in this case, the MTP 3 layer, for example). Then, the SSCF sends a PDU to its peer entity in the receiving exchange (i.e., the SSCF on the receiving side) in order to start the process. After this, a proving operation is started in order to determine whether the link is reliable. This is effected by transferring a number of proving PDUs between the SSCF layers of the two exchanges. The link is proved to be stable in case a predetermined number of proving PDUs has been transferred successfully during a predetermined period of time. This period of time is determined by a timer.

On the other hand, the SSCOP performs sequencing and acknowledgement of traffic, for example. That is, keeps all signalling units (messages) that flow across the link in sequential order, and it also provides for retransmission of defective traffic. To make certain the exchanges (communication nodes) are operational, each node executes a so-called "keep alive" procedure with its neighbour exchange. SSCOP also contains a procedure that allows the local user to look at the SSCOP queue for purposes of determining the status of messages. The SSCOP also provides a number of status reporting operations.

The Layer Management (LM), which is defined in ITU-T Q.2144, interacts with the layers to perform a variety of operations administration and maintenance (OAM) functions. Document WO-A-99/34620 discloses a layer Management Platform for the Signalling System No.7 (SS7). LM determines if a signalling link should be taken out of service or put into service (the latter function is called link proving). As part of these operations, links are monitored for excessive delays in the delivery of traffic. LM also permits a certain number of errors to occur on the link in order to avoid unnecessary changeovers to alternate links. Furthermore, a number of ongoing measurements are taken by the LM. For example, counters are maintained on how long each link has been in service, how often it has failed, how often and how many times the link has experienced congestion, and other information.

It is noted that the Layer Management is originally described only for the SAAL at NNI, and, as described above, the main function of it is the error monitoring and quality measurement production of NNI SAAL.

Each layer of the SAAL, i.e., the SSCS (Service Specific Convergence Sublayer (SSCS) comprising the sublayers SSCF layer and the SSCOP layer, uses timers and parameters as described in the ITU-T specifications. In particular, the SSCF-NNI layer timers and parameters are described in the ITU-T Q.2140, and the SSCOP layer parameters are described in the ITU-T Q.2110.

The SAAL uses timers and parameters when the SSCOP connection is established and when the signalling data is transferred via the corresponding signalling link/channel. For example, timers are used to check whether a connection is stable, as mentioned above. In this case, the timer defines a period during which a number of test messages (e.g., PDUs) have to be successfully transmitted via the desired link/channel. Parameters are utilized to set certain states in the corresponding SAAL sublayer. In particular, a data rate is included in this parameters.

At present, it is not standardized how these parameters are configured to the SAAL layers. In particular, the above-mentioned ITU-T specifications Q.2110, Q.2140 and Q.2144 describe the function of each separate sublayer and the needed timers and parameters, but a delivery and changing of the timers and parameters are left open. However, these specifications require that these parameters are configured.

### SUMMARY OF THE INVENTION

Hence, it is an object of the present invention to indicate a method how timers and parameters are delivered to the SSCF and SSCOP layers of SAAL.

This object is solved by a method according to claim 1.

In particular a method according to the invention serves to deliver delivering at least one operation variable from a Layer Management (LM) to a Service Specific Convergence Sublayer (SSCS) of a Signalling ATM Adaptation Layer (SAAL) and comprises the steps of providing the operation variable, providing a connection between the Layer Management (LM) and the Service Specific Convergence Sublayer (SSCS), and sending the operation variable from the Layer Management (LM) to the Service Specific Convergence Sublayer (SSCS) via the connection.

The operation variable can be a timer or a parameter. Furthermore, a plurality of operation variables, i.e., timers and parameters, can be delivered.

In addition, the invention proposes an apparatus for delivering at least one operation variable according to claim 9. The apparatus is adapted to execute Layer Management (LM) for a Signalling ATM Adaptation Layer (SAAL). The means further comprises an operation variable providing means for providing at least one operation variable, a connection adapted to be connected to a further system for executing a Service Specific Convergence Sublayer (SSCS) function, and a transmitting means for sending the operation variable to the further system via the connection.

Moreover, the invention proposes an apparatus for executing a Service Specific Convergence Sublayer (SSCS) function according to claim 11. This apparatus comprises a connection adapted to be connected to a further system for executing a Layer Management for a Signalling ATM Adaptation Layer (SAAL), and a receiving means for receiving operation information via the connection.

It is noted that the means mentioned above (i.e., the means executing the LM function, the SSCS function etc.) can be included in physically separated entities or can be included in one single network device, for example.

Thus, according to the invention, the role of Layer Management is expanded to include also the delivery of the operation information, i.e., timers and parameters, of the SSCS part of the SAAL at the UNI and the NNI.

The LM receives timers and parameters of itself and the SSCS part of the SAAL before the signalling link/channel is taken in use. The signalling link/channel can be taken in use after it has been configured to the network element.

In particular, the timers and parameters that depend from the bandwidth or from the quality observation algorithm of the signalling channel can be calculated at the same time and same place. Thus, necessary amendments of the timers and parameters can be effected very quickly.

The timers and parameters of SAAL and LM of a certain signalling link/channel are dependent for example of the bandwidth of the signalling link/channel. Each signalling link/channel has its own instance of SAAL. The timers and the parameters used in that specific SAAL instance can be different from the timers and parameters used in the other instance of SAAL.

When LM has received the timers and parameters to be used in the specific SAAL instance, it delivers timer and parameters to the SSCF and SSCOP layers separately.

The concentrated parameter delivery guarantees that the parameters used in the different layers of SAAL and by the Layer Management itself are not in conflict.

This method makes it easier and safer to change and redeliver the SAAL parameters and timers at different times and situations, because the Layer Management (LM) is aware of the current state of the signalling link/channel. It is desirable to protect the signalling link/channel from changes in certain situations, for example, during the signalling data transfer.

One of the other advantages is that the same timer and parameter distribution mechanism can be used both for the SAAL at the UNI and the SAAL at the NNI. Currently SSCF-UNI does not have any standardized parameters, which should be delivered. However, for future modification, parameters which might be necessary then can easily be delivered by using the method according to the invention. The SSCOP, on the other hand, has the same set of parameters to be used both in UNI and NNI.

The method according to the invention is especially useful in environments, where the SAAL stack implementation is distributed. In such kind of environment, each SAAL layer has a separate, independently executing entity. Also the Layer Management (LM) has an independent entity. Each signalling link which is configured to the network element has one dedicated entity of SSCF, SSCOP and LM.

Further advantageous developments are set out in the dependent claims.

In particular, the Service Specific Convergence Sublayer (SSCS) can comprise a Service Specific Coordination Function (SSCF) layer or a Service Specific Connection Oriented Protocol (SSCOP) layer.

The Service Specific Coordination Function (SSCF) can be provided at a User Network Interface (UNI) or at a Network Node Interface (NNI).

Moreover, the operation variable can be stored in the Service Specific Convergence Sublayer (SSCS). By this measure, the corresponding function in the SSCS can easily access to the operation variable, i.e., the timers and parameters.

### BRIEF DESCRIPTION OF THE DRAWINGS

The present invention will be more readily understood with reference to the accompanying drawings in which:
Fig. 1 shows broadband signalling stacks and SAAL;
Fig. 2 shows a Layer management for SAAL;
Fig. 3 shows the principle of time and parameter delivery to the SSCS part of SAAL according to an embodiment;
Fig. 4 shows structures of means adapted for Layer Management and SSCF;
Fig. 5 shows a flow chart of a time and parameter delivery process according to the embodiment; and
Fig. 6 shows the time and parameter delivery in case of two signalling links according to the embodiment.

### DETAILED DESCRIPTION OF PREFERRED EMBODIMENTS

In the following, a preferred embodiment of the invention is described in more detail with reference to the accompanying drawings.

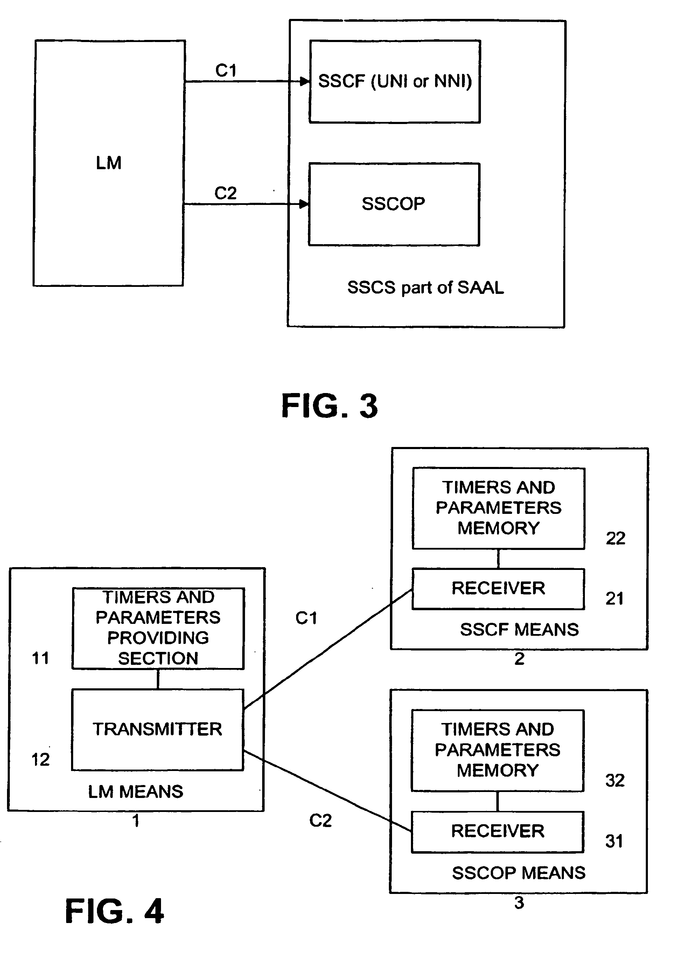

Fig. 3 shows the configuration of the SSCS part of the SAAL and a Layer Management (LM) thereof. The normal signal flow is as indicated in Fig. 2, and for simplifying the illustration, the arrows therefor are omitted in Fig. 3. However, in Fig. 3 two arrows denoted with C1 and C2 are shown which indicate connections between the LM and the SSCF on the one hand and the LM and the SSCOP on the other hand. By these connections, connections are provided which are independent from the normal signalling protocols.

The connections can be implemented by physical connections or channels between network elements which employ the corresponding functions (i.e., an element providing the LM function, another element providing the SSCF function and a further element providing the SSCOP function). However, these connections can also be provided by existing connections which are switched in such a manner that a direct and independent connection is possible.

By using these connections between the LM and the SSCF on the one hand and the LM and the SSCOP on the other hand, operation variables like timers and/or parameters are directly supplied to the SAAL sublayers SSCF and SSCOP in the SSCS part of the SAAL. That is, the timers and parameters are transmitted to the SSCF and SSCOP without using any primitives or the like.

In Fig. 4, a schematically views of means adapted for Layer Management (LM) and SSCF are shown. Here, only the means essential for the invention are illustrated. It is noted that the means can either be separate entities or can be implemented in one physical entity.

The LM means is indicated with reference number 1. The LM means 1 comprises a timers and parameters providing section 11 which provides, generates or obtains the timers and parameters which are to be sent to the SSCS part of the SAAL. Reference numeral 12 denotes a transmitter which sends the timers and parameters via a connection C1 to the corresponding SSCS means.

Reference numeral 2 denotes a means which performs the SSCF. This SSCF means receives the timers and parameters via the connection C1 by a receiver 21. Furthermore, the SSCF means 2 comprises a timers and parameters memory 22 for storing the received timers and parameters.

Reference numeral 3 denotes a corresponding SSCOP means which performs an SSCOP function. As derivable from Fig. 4, the structure essential for the present embodiment is the same as that shown with respect to the SSCF means.

That is, the SSCOP means also comprises a receiver 31 and a timers and parameters memory 31. The transmitter 31 is connected with the receiver 31 of the SSCOP means by the connection C2.

In the arrangement described above, the separate delivery of the timers and parameters is in particular advantageous, since due to the connections C1 and C2 the necessary timers and parameters can be quickly and easily delivered to the SAAL means 2 and 3. Thus, the system can respond quickly to changes of the link status.

It is noted that the means 1, 2 and 3 do not have to be separate entities. That is, all means can be provided in one single entity, for example. Alternatively, the SSCF and SSCOP means can be provided in a first entity and the LM can be provided in a second entity physically separated from the first entity. The embodiment can applied to all these possibilities advantageously since the delivery of the timers and parameters is independent from other signalling between the sublayers.

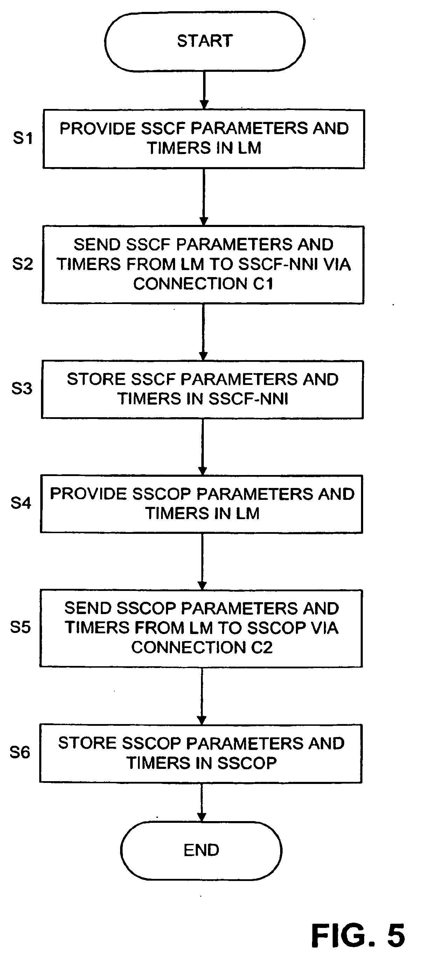

The process performed for transmitting the timers and parameters is described by referring to the flowchart shown in Fig. 5.

In step S1, parameters and timers for the SSCF are provided. For example, timer values which are used to for alignment procedures (performed by the SSCF) are calculated by the LM with respect to the known state of the link. In step S2, the SSCF parameters and timers are transmitted to the SSCF-NNI (i.e., the SSCF placed at a Network Node Interface) via the connection C1. In step S3, the received SSCF parameters and timers are stored in the SSCF-NNI such that they can easily be extracted and immediately used.

Corresponding to step S1, in step S4 SSCOP parameters and timers are provided by the LM. For example, parameters which describe the state of an SSCOP connection (in service alignment not successful, etc.) can be set by the LM or obtained by the LM from other sources (for example, from the SAAL of the other side of the link). These SSCOP parameters and timers are transmitted to the SSCOP via the connection C2. Correspondingly to step S3, these SSCOP parameters are stored in the SSCOP in step S6.

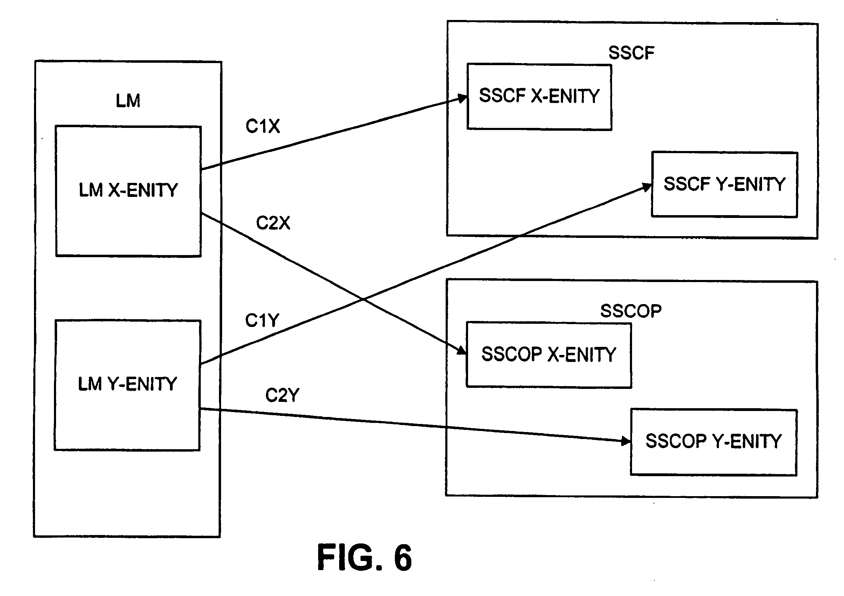

By referring to Fig. 6, an example is described in which timers and parameters for two signalling links are delivered.

It is assumed that there are two links, indicated by X and Y. Thus, there are two SAAL instances. Furthermore, there are shown a plurality of entities which execute the different SAAL functions. That is, in the SSCF sublayer, two entities are present, one for the X link and the other for the Y link. Correspondingly, an SSCOP X-entity and an SSCOP Y-entity are present in the SSCOP sublayer. Furthermore, also in the Layer Management (LM), two entities, i.e. the LM X-entity and the LM Y-entity are present.

Thus, in this example the SAAL stack implementation is distributed. That is, for each signalling link which is configured to the corresponding network element, a dedicated entity of SSCF, SSCOP and Layer Management is provided. These entities can be implemented in the form of separate devices. In this case, the timer and parameter delivery according to the present embodiment is very advantageous since, although the SAAL stack is highly distributed, all necessary parameters and timers can be delivered to the corresponding entities very quickly. This allows a quick response of the SAAL to changing conditions of the links by the LM.

The above description and accompanying drawings only illustrate the present invention by way of example. Thus, the embodiment of the invention and the modifications thereof described above may vary within the scope of the attached claims.

## Claims

1. A method for delivering at least one operation variable from a Layer Management (LM) to a Service Specific Convergence Sublayer (SSCS) of a Signalling ATM Adaptation Layer (SAAL) comprising
providing (S1, S4) said operation variable;
providing a connection (C1, C2) between said Layer Management (LM) and said Service Specific Convergence Sublayer (SSCS); and
sending said operation variable from said Layer Management (LM) to said Service Specific Convergence Sublayer (SSCS) via said connection (C1).

2. The method according to claim 1, wherein said Service Specific Convergence Sublayer (SSCS) comprises a Service Specific Coordination Function (SSCF).

3. The method according to claim 1, wherein said Service Specific Convergence Sublayer (SSCS) comprises a Service Specific Connection Oriented Protocol (SSCOP).

4. The method according to claim 2, wherein said Service Specific Coordination Function (SSCF) is provided at a User Network Interface (UNI).

5. The method according to claim 2, wherein said Service Specific Coordination Function (SSCF) is provided at a Network Node Interface (NNI).

6. The method according to claim 1, wherein said operation variable includes a timer.

7. The method according to claim 1, wherein said operation variable includes a parameter.

8. The method according to claim 1, further comprising the step of storing (S3, S6) said operation variable in said Service Specific Convergence Sublayer (SSCS).

9. An apparatus for delivering at least one operation variable, said apparatus being adapted to execute Layer Management (LM) for a Signalling ATM Adaptation Layer (SAAL) comprising
an operation variable providing means (11) for providing at least one operation variable; **characterized by**
a connection (C1, C2) adapted to be connected to a further means (2, 3) for executing a Service Specific Convergence Sublayer (SSCS) function; and
a transmitting means (12) for sending said operation variable to said further means (2, 3) via said connection (C1 C2).

10. The apparatus according to claim 9, wherein the means for executing a Service Specific Convergence Sublayer (SSCS) function comprises
a receiving means (21, 31) for receiving operation information via said connection.

11. The apparatus according to claim 9, wherein said means (2) for executing a Service Specific Convergence Sublayer (SSCS) function is adapted to perform a Service Specific Coordination Function (SSCF).

12. The apparatus according to claim 9, wherein said means (3) for executing a Service Specific Convergence Sublayer function is adapted to perform a Service Specific Connection Oriented Protocol (SSCOP).

13. The apparatus according to claim 11, wherein said means (2, 3) is provided for a User Network Interface (UNI).

14. The apparatus according to claim 11, wherein said means (2, 3) is provided for a Network Node Interface (NNI).

15. The apparatus according to claim 9, further comprising a storing means (22, 32) for storing said operation variable received by said receiving means (21, 31).

16. The apparatus according to claim 9, wherein said operation variable comprises a timer.

17. The apparatus according to claim 9, wherein said operation variable comprises a parameter.

## Patentansprüche

1. Verfahren zum Übergeben von zumindest einer Betriebsvariablen von einer Schichtverwaltung (LM) an eine dienstspezifische Konvergenz-Unterschicht (SSCS) einer ATM-Anpassungsschicht für Signalisierung (SAAL), mit:
Bereitstellen (S1, S4) der Betriebsvariablen;
Bereitstellen einer Verbindung (C1, C2) zwischen der Schichtverwaltung (LM) und der dienstspezifischen Konvergenz-Unterschicht (SSCS); und
Senden der Betriebsvariablen von der Schichtverwaltung (LM) an die dienstspezifische Konvergenz-Unterschicht (SSCS) über die Verbindung (C1).

2. Verfahren gemäß Anspruch 1, wobei die dienstspezifische Konvergenz-Unterschicht (SSCS) eine dienstspezifische Koordinationsfunktion (SSCF) aufweist.

3. Verfahren gemäß Anspruch 1, wobei die dienstspezifische Konvergenz-Unterschicht (SSCS) ein dienstspezifisches verbindungsorientiertes Protokoll (SSCOP) aufweist.

4. Verfahren gemäß Anspruch 2, wobei die dienstspezifische Koordinationsfunktion (SSCF) an einer Benutzernetzwerkschnittstelle (UNI) bereitgestellt ist.

5. Verfahren gemäß Anspruch 2, wobei die dienstspezifische Koordinationsfunktion (SSCF) an einer Netzwerkknotenschnittstelle (NNI) bereitgestellt ist.

6. Verfahren gemäß Anspruch 1, wobei die Betriebsvariable einen Zeitgeber umfasst.

7. Verfahren gemäß Anspruch 1, wobei die Betriebsvariable einen Parameter umfasst.

8. Verfahren gemäß Anspruch 1, weiter mit dem Schritt des Speicherns (S3, S6) der Betriebsvariablen in der dienstspezifischen Konvergenz-Unterschicht (SSCS).

9. Vorrichtung zum Übergeben von zumindest einer Betriebsvariablen, wobei die Vorrichtung dazu angepasst ist, um eine Schichtverwaltung (LM) für eine ATM-Anpassungsschicht für Signalisierung (SAAL) auszuführen, mit:
einer Betriebsvariablen-Bereitstellungseinrichtung (11) zum Bereitstellen von zumindest einer Betriebsvariablen; **gekennzeichnet durch**
eine Verbindung (C1, C2), die dazu angepasst ist, um mit einer weiteren Einrichtung (2, 3) zum Ausführen einer Funktion einer dienstspezifischen Konvergenz-Unterschicht (SSCS) verbunden zu werden; und
einer Übertragungseinrichtung (12) zum Senden der Betriebsvariablen an die weitere Einrichtung (2, 3) über die Verbindung (C1, C2).

10. Vorrichtung gemäß Anspruch 9, wobei die Einrichtung zum Ausführen einer Funktion einer dienstspezifischen Konvergenz-Unterschicht (SSCS) aufweist:
eine Empfangseinrichtung (21, 31) zum Empfangen von Betriebsinformationen über die Verbindung.

11. Vorrichtung gemäß Anspruch 9, wobei die Einrichtung (2) zum Ausführen einer Funktion einer dienstspezifischen Konvergenz-Unterschicht (SSCS) dazu angepasst ist, um eine dienstspezifische Koordinationsfunktion (SSCF) durchzuführen.

12. Vorrichtung gemäß Anspruch 9, wobei die Einrichtung (3) zum Ausführen einer Funktion einer dienstspezifischen Konvergenz-Unterschicht dazu angepasst ist, um ein dienstspezifisches verbindungsorientiertes Protokoll (SSCOP) durchzuführen.

13. Vorrichtung gemäß Anspruch 11, wobei die Einrichtung (2, 3) für eine Benutzernetzwerkschnittstelle (UNI) bereitgestellt ist.

14. Vorrichtung gemäß Anspruch 11, wobei die Einrichtung (2, 3) für eine Netzwerkknotenschnittstelle (NNI) bereitgestellt ist.

15. Vorrichtung gemäß Anspruch 9, weiter mit einer Speichereinrichtung (22, 32) zum Speichern der durch die Empfangseinrichtung (21, 31) empfangenen Betriebsvariablen.

16. Vorrichtung gemäß Anspruch 9, wobei die Betriebsvariable einen Zeitgeber umfasst.

17. Vorrichtung gemäß Anspruch 9, wobei die Betriebsvariable einen Parameter umfasst.

## Revendications

1. Procédé permettant de délivrer au moins une variable de fonctionnement issue d'une Gestion de couche (LM) à une Sous-couche de convergence spécifique du service (SSCS) d'une Couche d'adaptation ATM de signalisation (SAAL) comprenant
la fourniture (S1, S4) de ladite variable de fonctionnement;
la fourniture d'une connexion (C1, C2) entre ladite Gestion de couche (LM) et la dite Sous-couche de convergence spécifique du service (SSCS) ; et
l'envoi de ladite variable de fonctionnement issue de ladite Gestion de couche (LM) à ladite Sous-couche de convergence spécifique du service (SSCS) via ladite connexion (C1).

2. Procédé selon la revendication 1, dans lequel ladite Sous-couche de convergence spécifique du service (SSCS) comprend une Fonction de coordination spécifique du service (SSCF).

3. Procédé selon la revendication 1, dans lequel ladite Sous-couche de convergence spécifique du service (SSCS) comprend un Protocole orienté connexion spécifique du service (SSCOP).

4. Procédé selon la revendication 2, dans lequel ladite Fonction de coordination spécifique du service (SSCF) est prévue au niveau d'une Interface de réseau utilisateur (UNI).

5. Procédé selon la revendication 2, dans lequel ladite Fonction de coordination spécifique du service (SSCF) est prévue au niveau d'une Interface de mode de réseau (NNI).

6. Procédé selon la revendication 1, dans lequel ladite variable de fonctionnement comprend un temporisateur.

7. Procédé selon la revendication 1, dans lequel ladite variable de fonctionnement comprend un paramètre.

8. Procédé selon la revendication 1, comprenant en outre l'étape de stockage (S3, S6) de ladite variable de fonctionnement dans ladite Sous-couche de convergence spécifique du service (SSCS).

9. Dispositif permettant de délivrer au moins une variable de fonctionnement, ledit dispositif étant adapté pour exécuter une Gestion de couche (LM) d'une Couche d'adaptation ATM de signalisation (SAAL) comprenant
des moyens de fourniture d'une variable de fonctionnement (11) pour fournir au moins une variable de fonctionnement ; **caractérisé par**
une connexion (C1, C2) adaptée pour être connectée à des moyens supplémentaires (2, 3) pour exécuter une fonction de Sous-couche de convergence spécifique du service (SSCS) ; et
des moyens de transmission (12) pour l'envoi de ladite variable de fonctionnement auxdits moyens supplémentaires (2, 3) via ladite connexion (C1, C2).

10. Dispositif selon la revendication 9, dans lequel les moyens pour exécuter une fonction de Sous-couche de convergence spécifique du service (SSCS) comprennent
des moyens de réception (21, 31) pour recevoir des informations de fonctionnement via ladite connexion.

11. Dispositif selon la revendication 9, dans lequel lesdits moyens (2) pour exécuter une fonction de Sous-couche de convergence spécifique du service (SSCS) sont adaptés pour exécuter une Fonction de coordination spécifique du service (SSCF).

12. Dispositif selon la revendication 9, dans lequel lesdits moyens (3) pour exécuter une fonction de Sous-couche de convergence spécifique du service (SSCS) sont adaptés pour exécuter un Protocole orienté connexion spécifique du service (SSCOP).

13. Dispositif selon la revendication 11, dans lequel lesdits moyens (2, 3) sont prévus pour une Interface de réseau utilisateur (UNI).

14. Dispositif selon la revendication 11, dans lequel lesdits moyens (2, 3) sont prévus pour une Interface de noeud de réseau (NNI).

15. Dispositif selon la revendication 9, comprenant en outre des moyens de stockage (22, 32) pour stocker ladite variable de fonctionnement reçue par lesdits moyens de réception (21, 31).

16. Dispositif selon la revendication 9, dans lequel ladite variable de fonctionnement comprend un temporisateur.

17. Dispositif selon la revendication 9, dans lequel ladite variable de fonctionnement comprend un paramètre.
